# FASCICULE DE BREVET EUROPEEN

(11) **EP 3 080 433 B1**
(45) Date de publication et mention de la délivrance du brevet: **21.02.2018**
(21) Numéro de dépôt: 14793217.2
(22) Date de dépôt: 25.09.2014
(51) Int. Cl.: F02M 59/10, F16C 7/00

(54) **GROUPE MOTOPROPULSEUR QUI EST ÉQUIPE D'UN POUSSOIR D'ACTIONNEMENT COMMANDÉ PAR UN CHEMIN DE CAME PORTÉ PAR UNE BIELLE**
ANTRIEBSSTRANG MIT EINER BETÄTIGUNGSDRUCKSTANGE MIT STEUERUNG ÜBER EINE VON EINER PLEUELSTANGE GETRAGENEN NOCKENSPUR
POWER TRAIN WHICH IS FITTED WITH AN ACTUATING PUSH-ROD CONTROLLED BY A CAM TRACK CARRIED BY A CONNECTING ROD

(30) Priorité: 09.12.2013 FR 1362304
(43) Date de publication de la demande: 19.10.2016
(73) Titulaire: Renault S.A.S., 92100 Boulogne-Billancourt (FR)
(72) Inventeur: PORTELA-GARNIKA, Gonzalo, F-75012 Paris (FR); VINCENT, Franck, 78460 Chevreuse (FR); CHANCERELLE, Jean-Baptiste, F-92500 Rueil-Malmaison (FR)
(86) Numéro de dépôt international: PCT/FR2014/052396
(87) Numéro de publication internationale: WO 2015/086929

(56) Documents cités:
- EP-A2- 2 375 030
- DE-A1- 3 910 794

## Description

### DOMAINE TECHNIQUE DE L'INVENTION

L'invention concerne un groupe motopropulseur de véhicule automobile comportant un vilebrequin et une pompe unitaire d'injection de carburant qui est actionnée par un chemin de came mu par le vilebrequin.

### ARRIERE PLAN TECHNIQUE DE L'INVENTION

L'invention concerne plus particulièrement un groupe motopropulseur de véhicule automobile comportant :
- un vilebrequin monté rotatif autour d'un axe de rotation ;
- au moins une bielle dont une tête est montée à rotation sur un maneton associé du vilebrequin ;
- au moins un poussoir d'actionnement coulissant dans un plan perpendiculaire à l'axe de rotation du vilebrequin entre une position étendue vers laquelle il est rappelé, et une position rétractée ;
- un chemin de came qui est mu par le vilebrequin pour pousser le poussoir vers sa position rétractée à chaque révolution de vilebrequin, l'extrémité libre du poussoir formant un suiveur de came.

On connaît déjà des groupes motopropulseurs de ce type. En général, la commande d'actionnement de la pompe unitaire d'injection est réalisée par une came excentrique qui est fixée à un tourillon du vilebrequin. Le suiveur de came est alors en contact permanent avec le chemin de came périphérique de la came excentrique.

La publication EP2375030-A2 propose un groupe motopropulseur comportant une pompe unitaire avec une commande d'actionnement réalisée par une came excentrique solidaire d'un tourillon de vilebrequin.

Une telle conception permet de commander de manière satisfaisante la pompe unitaire d'injection.

Néanmoins, les groupes motopropulseurs actuels sont de plus en plus compacts. Or, l'encombrement, notamment longitudinal, d'une came excentrique empiète sur l'espace réservé à la rotation de la bielle. Il en découle que l'architecture du groupe motopropulseur doit être profondément remaniée pour permettre d'agencer une came à excentrique.

### BREF RESUME DE L'INVENTION

L'invention propose un groupe motopropulseur du type décrit précédemment qui est particulièrement compact. Ce groupe motopropulseur est caractérisé en ce que le chemin de came est porté par la bielle.

Selon d'autres caractéristiques du groupe motopropulseur :
- le chemin de came est formé par une portion d'une face de chant de la bielle ;
- la tête de bielle est réalisée par assemblage d'un chapeau sur un corps de la bielle au moyen d'au moins une vis de fixation reçue dans un puits réalisé à flanc de tête, le chemin de came étant réalisé sur une face externe dudit puits ;
- le chemin de came est réalisé dans une pièce rapportée qui est fixée sur une portion de face de chant de la bielle ;
- le chemin de came est orienté globalement parallèlement à un axe principal de la bielle ;
- l'extrémité libre du poussoir est en contact avec le chemin de came uniquement pendant une fraction de révolution du vilebrequin entre une position angulaire amont d'accostage et une position angulaire aval de décollage, l'extrémité libre du poussoir étant décollée du chemin de came pendant le reste de la révolution du vilebrequin ;
- entre la position angulaire amont d'accostage et une position angulaire intermédiaire du vilebrequin, le chemin de came présente une première portion de contact inactif qui forme un profil neutre permettant un contact entre l'extrémité libre du poussoir et le chemin de came sans sollicitation du poussoir vers sa position rétractée ;
- le chemin de came présentant une deuxième portion de contact de poussée agencée dans la continuité de la première portion de contact inactif, cette deuxième portion permettant de commander le coulissement du poussoir depuis sa position étendue jusqu'à sa position rétractée pendant la rotation du vilebrequin depuis sa position angulaire intermédiaire vers sa position angulaire de décollage ;
- le chemin de came présente, dans la continuité de sa deuxième portion de contact actif, une troisième portion présentant un profil permettant d'accompagner le poussoir jusqu'à sa position inactive lors de la rotation du vilebrequin jusqu'à sa position angulaire de décollage ;
- l'extrémité libre du poussoir formant suiveur de came est équipée d'un galet apte à rouler sur le chemin de came.

L'invention concerne aussi un véhicule automobile équipé d'un moteur à combustion interne, caractérisé en ce qu'il comporte un groupe motopropulseur réalisé selon les enseignements de l'invention.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente un vilebrequin de moteur à combustion interne qui comporte une bielle et une pompe unitaire d'injection qui sont agencés selon les enseignements de l'invention ;
- la figure 2 est une vue selon le plan de coupe 2-2 de la figure 1 qui représente la bielle et la pompe unitaire d'injection, l'enveloppe de l'espace parcouru par la bielle durant une révolution du vilebrequin étant représenté en traits interrompue ;
- la figure 3 est une vue similaire à celle de la figure 2 qui représente le vilebrequin dans une position angulaire d'accostage de la bielle avec la pompe unitaire d'injection ;
- la figure 4 est une vue similaire à celle de la figure 2 qui représente le vilebrequin dans une position angulaire d'actionnement dans laquelle la pompe unitaire d'injection est commandée dans sa position rétractée par la bielle ;
- la figure 5 est une vue similaire à celle de la figure 2 qui représente le vilebrequin dans une position angulaire de décollage dans laquelle la bielle s'apprête à décoller de la pompe unitaire d'injection en position étendue ;
- la figure 6 est une vue de face qui représente une moitié de tête de bielle comportant le chemin de came commandant le coulissement de la pompe unitaire d'injection.

### DESCRIPTION DETAILLEE DES FIGURES

Dans la suite de la description, des éléments présentant une structure identique ou des fonctions analogues seront désignés par des signes de référence identiques.

Dans la suite de la description, on adoptera à titre non limitatif des orientations longitudinale, verticale et transversale indiquées par le trièdre "L,V,T" des figures. L'orientation verticale est utilisée comme repère géométrique sans rapport avec la direction de la gravité.

Dans la suite de la description, les termes "amont" et "aval" sont utilisés pour orienter le chemin 48 de came en fonction du sens de déplacement de l'extrémité 46 libre du poussoir lors de la rotation du vilebrequin 12 entre sa position angulaire d'accostage et sa position angulaire de décollage comme cela sera expliqué plus en détails par la suite.

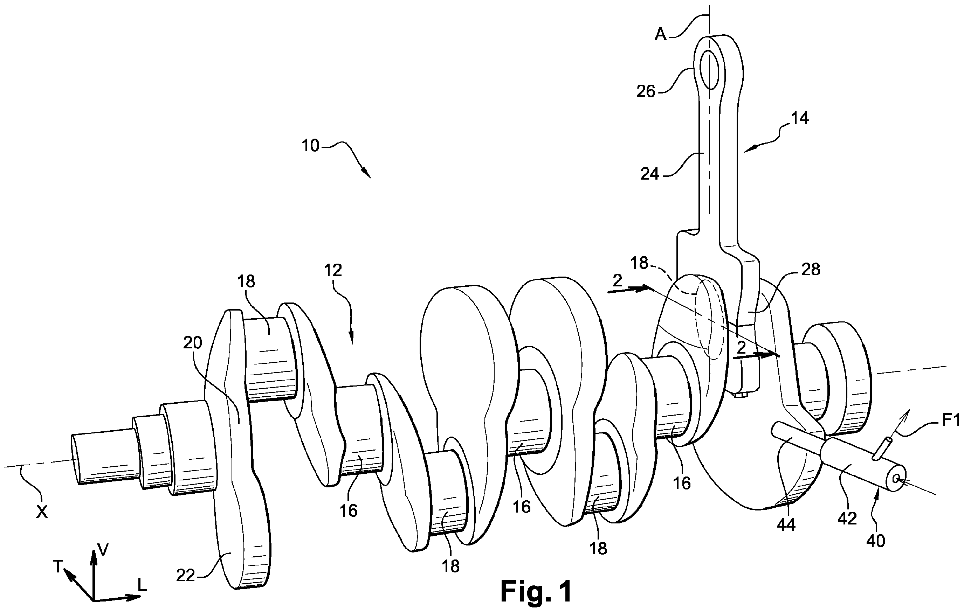

On a représenté à la figure 1 un groupe 10 motopropulseur qui comporte un moteur (non représenté) de type Diesel qui comporte ici quatre cylindres.

De manière connue, chaque cylindre reçoit en coulissement un piston (non représenté) selon un axe "A" vertical. Chaque piston délimite avec son cylindre une chambre de combustion qui est alimentée en carburant, par exemple en gazole.

Le coulissement des pistons entraîne en rotation un vilebrequin 12 qui est monté rotatif autour d'un axe "X" longitudinal de rotation par l'intermédiaire de bielles 14. A la figure 1, une seule des quatre bielles 14 a été représentée pour des raisons de clarté de la figure.

De manière connu le vilebrequin 12 comporte plusieurs tourillons 16 qui sont alignés le long de l'axe "X" et qui sont prévus pour reposer sur des paliers (non représentés) du moteur.

Les tourillons 16 sont alternés longitudinalement avec des manetons 18 excentrés par rapport à l'axe "X" du vilebrequin 12. Chaque maneton 18 est fixé aux tourillons 16 adjacents par deux bras 20 radiaux de manivelle qui sont agencés longitudinalement de part et d'autre du maneton 18.

Certains bras 20 de manivelle sont prolongés par un contrepoids 22 qui s'étend radialement à l'opposé du bras 20 pour équilibrer le vilebrequin 12 pendant sa rotation.

Chaque bielle 14 comporte un corps 24 allongé d'axe "B" principal d'orientation globalement verticale qui comporte un pied 26 d'extrémité supérieure et une tête 28 d'extrémité inférieure.

Le pied 26 présente une bague d'axe longitudinal "Y" qui est destinée à être montée pivotante sur le piston.

La tête 28 de la bielle 14 présente un anneau d'axe "Z" longitudinal de plus grand diamètre que la bague du pied 26 pour le montage à rotation de la tête 28 sur un maneton 18 associé du vilebrequin 12.

La bielle 14 s'étend ainsi dans un plan radial par rapport à l'axe "X" du vilebrequin et elle est délimitée transversalement par une face 30 périphérique de chant.

De manière connue, l'anneau formant la tête 28 est ici coupé diamétralement en deux dans un plan perpendiculaire à l'axe "B" principal du corps 24. Ainsi, un premier demi-anneau supérieur est réalisé en une seule pièce avec le corps 24 de la bielle, tandis que le demi-anneau inférieur dissocié du corps 24 est généralement connu sous l'appellation "chapeau" 32 ou pontet.

La tête 28 de bielle est ainsi réalisée par assemblage du chapeau 32 sur le corps 24 de la bielle au moyen de deux vis 34 de fixation. A cet effet, chaque flanc de la tête 28 est muni d'un puits 36 traversant de part en part le chapeau 32 et le demi-anneau supérieur. Chaque puits 36 présente ici un axe parallèle à l'axe "B" du corps 24 de la bielle. Chaque vis 34 est ici vissée dans un taraudage du demi-anneau supérieur pour serrer le chapeau 32 contre le corps 24 de la bielle.

En variante, la tête de bielle est réalisée en une seule pièce.

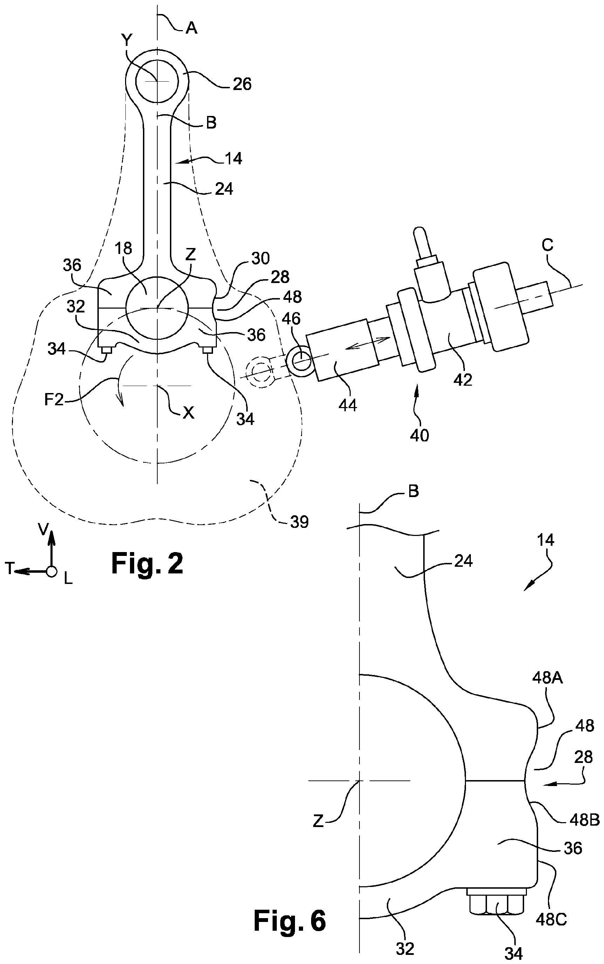

On a représenté à la figure 2 le vilebrequin 12 dans une position angulaire dite de "point mort bas". Lors d'une révolution du vilebrequin 12 autour de son axe "X" dans un sens antihoraire, comme représenté par la flèche "F2", l'axe "Z" de la tête 28 de bielle est entraînée en déplacement selon un cercle centré sur l'axe "X" de rotation du vilebrequin 12, tandis que le pied 26 de bielle coulisse le long de l'axe "A" de coulissement du piston. L'espace balayé par la bielle 14 durant une révolution du vilebrequin 12 est appelé "mandoline 39". L'enveloppe de la mandoline 39 a été indiquée en traits interrompus à la figure 2.

Par ailleurs, au moins une chambre de combustion du moteur est alimentée individuellement en carburant, notamment en gazole, par une pompe 40 unitaire d'injection associée. La pompe 40 unitaire d'injection est agencée à proximité de la tête 28 de la bielle 14 associée à ladite chambre de combustion.

Dans l'exemple représenté aux figures, une seule pompe 40 unitaire d'injection a été représentée pour des raisons de clarté. On comprendra que chaque chambre de combustion du moteur peut être alimentée par une pompe unitaire d'injection associée, chaque pompe unitaire d'injection étant agencée à proximité de la bielle associée à ladite chambre de combustion.

De manière connue, la pompe 40 unitaire d'injection de carburant est fixée par rapport au moteur. Elle comporte un corps 42 fixe dans lequel est reçu un poussoir 44 d'actionnement, formé par une tige d'axe "C" qui s'étend dans un plan perpendiculaire à l'axe "X" de rotation du vilebrequin 12. Une extrémité 46 libre du poussoir 44 est tournée vers la bielle 14 associée.

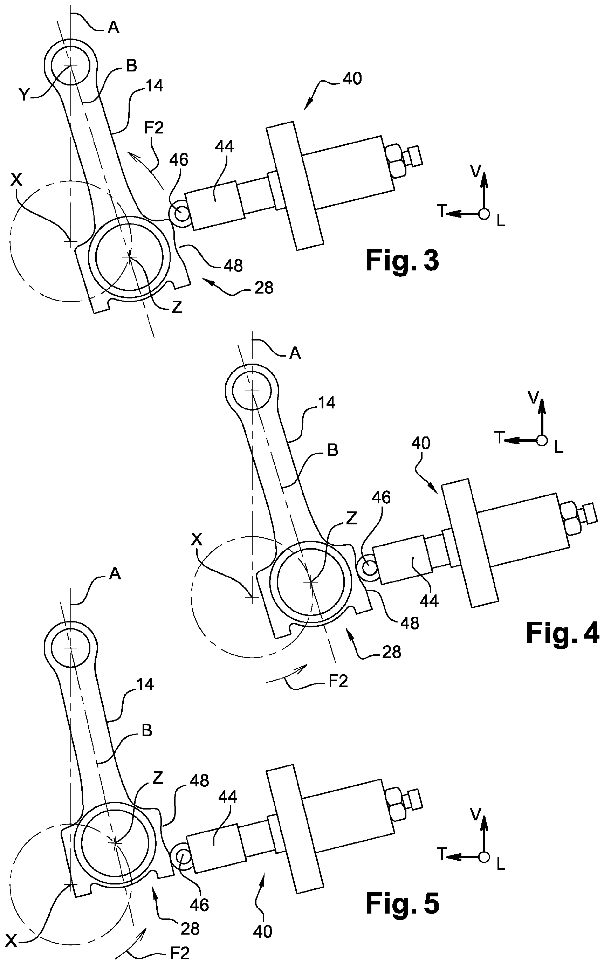

Le poussoir 44 est ainsi monté coulissant dans le corps 42 selon son axe "C" entre :
- une position inactive étendue dans laquelle l'extrémité 46 libre du poussoir 44 est située à l'intérieur de la mandoline 39 et dans laquelle il est rappelé, comme représenté aux figures 3 et 5, et
- une position active rétractée dans laquelle le poussoir 44 est coulissé vers l'intérieur du corps 42 de manière que son extrémité 46 libre soit sensiblement tangente à l'enveloppe de la mandoline 39, comme indiqué en traits pleins à la figure 2 et comme illustré à la figure 4.

La pompe 40 unitaire d'injection est plus particulièrement agencée de manière que l'axe "C" de coulissement du poussoir 44 soit sensiblement normal à l'enveloppe de la mandoline 39.

Lors du coulissement du poussoir 44 depuis sa position inactive étendue vers sa position active rétractée, du carburant est injecté dans la chambre de combustion associée, comme indiqué par la flèche "F1" de la figure 1.

Le poussoir 44 est par exemple rappelé vers sa position inactive étendue par la pression du carburant contenu dans le corps 42 de la pompe 40 unitaire d'injection et/ou par des moyens élastiques de rappel tel qu'un ressort.

Le coulissement du poussoir 44 entre ses deux positions est commandé par un chemin 48 de came qui est mu par le vilebrequin 12 pour pousser le poussoir 44 de la pompe unitaire vers sa position rétractée à chaque révolution de vilebrequin 12, l'extrémité 46 libre du poussoir 44 formant un suiveur de came.

L'extrémité 46 libre du poussoir 44 est avantageusement équipée d'un galet rotatif selon un axe longitudinal apte à rouler sur le chemin 48 de came.

Selon les enseignements de l'invention, le chemin 48 de came est porté par la bielle 14.

Dans le mode de réalisation représenté aux figures, le chemin 48 de came est formé par une portion de la face 30 de chant de la bielle 14.

Le chemin 48 de came est plus particulièrement formé par une face externe du puits 36 qui fait face à l'extrémité 46 libre du poussoir 44. Ainsi, le chemin 48 de came est globalement orienté parallèlement à l'axe "B" principal de la bielle 14.

Selon une variante non représentée de l'invention, le chemin de came est réalisé sur une pièce rapportée qui est fixée sur une portion de face de chant de la bielle.

La course de coulissement du poussoir 44 entre ses deux positions est inférieure au déplacement de la bielle 14 selon l'axe "C" du poussoir 44. De ce fait, l'extrémité 46 libre du poussoir 44 est en contact avec le chemin 48 de came uniquement pendant une fraction de révolution du vilebrequin autour de son axe "X" entre une position angulaire amont d'accostage, comme illustrée à la figure 3, et une position angulaire aval de décollage, comme illustrée à la figure 5. Cette fraction de révolution s'étend sur un secteur angulaire qui est inférieur à 180°, ici environ 60°.

Pendant le reste de la révolution du vilebrequin 12, l'extrémité 46 libre du poussoir 44 n'est pas en contact avec le chemin 48 de came.

La forme du chemin 48 de came est à présent décrite en référence à la figure 6.

Pour éviter que des chocs ne provoquent la dégradation de la bielle 14 ou de la pompe 40 unitaire d'injection, le chemin 48 de came présente une première portion 48A aval de contact inactif qui est ici agencée en haut du chemin 48 de came en référence à la figure 6. Cette première portion 48A de contact inactif forme un profil neutre permettant un contact entre le chemin 48 de came et l'extrémité 46 libre du poussoir 44 sans sollicitation du poussoir 44 vers sa position active rétractée, lorsque le vilebrequin 12 tourne entre la position angulaire amont d'accostage et une première position angulaire intermédiaire. En d'autres termes, lors de la rotation du vilebrequin 12 entre la position angulaire d'accostage et la première position intermédiaire, le chemin 48 de came glisse sensiblement tangentiellement par rapport à l'extrémité 46 libre du poussoir 44 dans sa position étendue.

Dans la continuité de la première portion 48A, le chemin 48 de came présente une deuxième portion 48B de contact de poussée. Cette deuxième portion 48B est conformée pour permettre de commander le coulissement du poussoir 44 depuis sa position inactive étendue jusqu'à sa position active rétractée pendant la rotation du vilebrequin depuis sa première position angulaire intermédiaire, comme illustrée à la figure 3, jusqu'à une deuxième position angulaire intermédiaire d'actionnement, comme illustrée à la figure 4.

Enfin, le chemin 48 de came présente, dans la continuité de sa deuxième portion 48B de contact actif, une troisième portion 48C dont le profil permet d'accompagner le poussoir 44 jusqu'à sa position étendue inactive sous l'effet de la force de rappel lors de la rotation du vilebrequin 12 depuis sa deuxième position angulaire intermédiaire jusqu'à sa position angulaire de décollage la force de rappel du poussoir 44 comme illustrée à la figure 5. Ainsi, cette troisième portion 48C permet d'éviter que le poussoir 44 ne soit rappelé trop brutalement jusqu'à sa position étendue.

Lorsque le vilebrequin 12 poursuit sa rotation dans un sens antihoraire au-delà de sa position angulaire de décollage, le décollement entre l'extrémité 46 libre du poussoir 44 décolle du chemin 48 de came intervient alors que le poussoir 44 occupe déjà sa position étendue inactive. Le vilebrequin 12 peut ainsi finir sa révolution sans contact entre la bielle 14 et le poussoir 44 avant d'entamer une nouvelle révolution.

Ainsi, la pompe 12 unitaire d'injection est actionnée une fois à chaque révolution du vilebrequin 12.

Le groupe 10 motopropulseur réalisé selon les enseignements de l'invention permet d'agencer des pompes unitaires d'injection avec des moteur qui sont normalement prévus pour d'autres dispositifs d'injection de carburant sans avoir à modifier la conception du moteur.

En outre, l'intégration du chemin de came sur la bielle permet de libérer de la place dans le moteur. Ceci permet ainsi d'agencer une pompe unitaire d'injection plus encombrante et plus fiable que dans un moteur équipé d'une came de commande de la pompe distincte de la bielle.

## Revendications

1. Groupe (10) motopropulseur de véhicule automobile comportant :
- un vilebrequin (12) monté rotatif autour d'un axe (X) de rotation ;
- au moins une bielle (14) dont une tête (28) est montée à rotation sur un maneton (18) associé du vilebrequin (12) ;
- au moins un poussoir (44) d'actionnement coulissant dans un plan perpendiculaire à l'axe (X) de rotation du vilebrequin (12) entre une position étendue vers laquelle il est rappelé, et une position rétractée ;
- un chemin (48) de came qui est mu par le vilebrequin (12) pour pousser le poussoir (44) vers sa position rétractée à chaque révolution de vilebrequin (12), l'extrémité (46) libre du poussoir (44) formant un suiveur de came ;
**caractérisé en ce que** le chemin (48) de came est porté par la bielle (14).

2. Groupe (10) motopropulseur selon la revendication précédente, **caractérisé en ce que** le chemin (48) de came est formé par une portion d'une face (30) de chant de la bielle (14).

3. Groupe (10) motopropulseur selon la revendication précédente, **caractérisé en ce que** la tête (28) de bielle (14) est réalisée par assemblage d'un chapeau (32) sur un corps (24) de la bielle (14) au moyen d'au moins une vis (34) de fixation reçue dans un puits (36) réalisé à flanc de tête (28), le chemin (48) de came étant réalisé sur une face externe dudit puits (36).

4. Groupe (10) motopropulseur selon la revendication 1, **caractérisé en ce que** le chemin de came est réalisé dans une pièce rapportée qui est fixée sur une portion de face de chant de la bielle.

5. Groupe (10) motopropulseur selon l'une quelconque des revendications précédentes, **caractérisé en ce que** le chemin (48) de came est orienté globalement parallèlement à un axe (B) principal de la bielle (14).

6. Groupe (10) motopropulseur selon l'une quelconque des revendications précédentes, **caractérisé en ce que** l'extrémité (46) libre du poussoir (44) est en contact avec le chemin (48) de came uniquement pendant une fraction de révolution du vilebrequin (12) entre une position angulaire amont d'accostage et une position angulaire aval de décollage, l'extrémité (46) libre du poussoir (44) étant décollée du chemin (48) de came pendant le reste de la révolution du vilebrequin (12).

7. Groupe (10) motopropulseur selon la revendication précédente, **caractérisé en ce que**, entre la position angulaire amont d'accostage et une position angulaire intermédiaire du vilebrequin (12), le chemin (48) de came présente une première portion (48A) de contact inactif qui forme un profil neutre permettant un contact entre l'extrémité (46) libre du poussoir (44) et le chemin (48) de came sans sollicitation du poussoir (44) vers sa position rétractée ;
le chemin (48) de came présentant une deuxième portion (48B) de contact de poussée agencée dans la continuité de la première portion (48A) de contact inactif, cette deuxième portion (48B) permettant de commander le coulissement du poussoir (44) depuis sa position étendue jusqu'à sa position rétractée pendant la rotation du vilebrequin (12) depuis sa position angulaire intermédiaire vers sa position angulaire de décollage.

8. Groupe (10) motopropulseur selon la revendication précédente, **caractérisé en ce que** le chemin (48) de came présente, dans la continuité de sa deuxième portion (48B) de contact actif, une troisième portion (48C) présentant un profil permettant d'accompagner le poussoir (44) jusqu'à sa position inactive lors de la rotation du vilebrequin (12) jusqu'à sa position angulaire de décollage.

9. Groupe (10) motopropulseur selon l'une quelconque des revendications précédentes, **caractérisé en ce que** l'extrémité (46) libre du poussoir (44) formant suiveur de came est équipée d'un galet apte à rouler sur le chemin (48) de came.

10. Véhicule automobile équipé d'un moteur à combustion interne, **caractérisé en ce qu'**il comporte un groupe (10) motopropulseur réalisé selon l'une quelconque des revendications précédentes.

## Patentansprüche

1. Antriebseinheit (10) eines Kraftfahrzeugs, die aufweist:
- eine Kurbelwelle (12), die um eine Drehachse (X) drehbar montiert ist;
- mindestens eine Pleuelstange (14), von der ein Kopf (28) auf einen zugeordneten Kurbelzapfen (18) der Kurbelwelle (12) drehbar montiert ist;
- mindestens einen Betätigungsdrücker (44), der in einer Ebene lotrecht zur Drehachse (X) der Kurbelwelle (12) zwischen einer ausgefahrenen Stellung, in die er zurückgeholt wird, und einer eingefahrenen Stellung gleitet;
- eine Nockenbahn (48), die von der Kurbelwelle (12) bewegt wird, um den Drücker (44) bei jeder Umdrehung der Kurbelwelle (12) in seine eingefahrene Stellung zu drücken, wobei das freie Ende (46) des Drückers (44) einen Nockenfolger bildet;
**dadurch gekennzeichnet, dass** die Nockenbahn (48) von der Pleuelstange (14) getragen wird.

2. Antriebseinheit (10) nach dem vorhergehenden Anspruch, **dadurch gekennzeichnet, dass** die Nockenbahn (48) von einem Abschnitt einer Hochkantseite (30) der Pleuelstange (14) gebildet wird.

3. Antriebseinheit (10) nach dem vorhergehenden Anspruch, **dadurch gekennzeichnet, dass** der Kopf (28) der Pleuelstange (14) durch Einbau einer Kappe (32) auf einen Körper (24) der Pleuelstange (14) mittels mindestens einer Befestigungsschraube (34) hergestellt wird, die in einem mit Kopfflanke (28) hergestellten Schacht (36) aufgenommen wird, wobei die Nockenbahn (48) auf einer Außenseite des Schachts (36) hergestellt wird.

4. Antriebseinheit (10) nach Anspruch 1, **dadurch gekennzeichnet, dass** die Nockenbahn in einem angesetzten Bauteil hergestellt wird, das an einem Hochkantseitenabschnitt der Pleuelstange befestigt ist.

5. Antriebseinheit (10) nach einem der vorhergehenden Ansprüche, **dadurch gekennzeichnet, dass** die Nockenbahn (48) global parallel zu einer Hauptachse (B) der Pleuelstange (14) ausgerichtet ist.

6. Antriebseinheit (10) nach einem der vorhergehenden Ansprüche, **dadurch gekennzeichnet, dass** das freie Ende (46) des Drückers (44) nur während eines Drehungsbruchteils der Kurbelwelle (12) zwischen einer vorderen Anlege-Winkelstellung und einer hinteren Abhebe-Winkelstellung mit der Nockenbahn (48) in Kontakt ist, wobei das freie Ende (46) des Drückers (44) während des Rests der Drehung der Kurbelwelle (12) von der Nockenbahn (48) abgehoben ist.

7. Antriebseinheit (10) nach dem vorhergehenden Anspruch, **dadurch gekennzeichnet, dass**, zwischen der vorderen Anlege-Winkelstellung und einer Zwischenwinkelstellung der Kurbelwelle (12), die Nockenbahn (48) einen ersten inaktiven Kontaktabschnitt (48A) aufweist, der ein neutrales Profil bildet, das einen Kontakt zwischen dem freien Ende (46) des Drückers (44) und der Nockenbahn (48) ohne Beaufschlagung des Drückers (44) in seine eingefahrene Stellung ermöglicht; wobei die Nockenbahn (48) einen zweiten Drückkontaktabschnitt (48B) aufweist, der in der Kontinuität des ersten inaktiven Kontaktabschnitts (48A) angeordnet ist, wobei dieser zweite Abschnitt (48B) es ermöglicht, während der Drehung der Kurbelwelle (12) von ihrer Zwischenwinkelstellung in ihre Abhebe-Winkelstellung das Gleiten des Drückers (44) von seiner ausgefahrenen Stellung bis in seine eingefahrene Stellung zu steuern.

8. Antriebseinheit (10) nach dem vorhergehenden Anspruch, **dadurch gekennzeichnet, dass** die Nockenbahn (48) in der Kontinuität ihres zweiten aktiven Kontaktabschnitts (48B) einen dritten Abschnitt (48C) aufweist, der ein Profil aufweist, das es erlaubt, den Drücker (44) während der Drehung der Kurbelwelle (12) bis in ihre Abhebe-Winkelstellung bis in seine inaktive Stellung zu begleiten.

9. Antriebseinheit (10) nach einem der vorhergehenden Ansprüche, **dadurch gekennzeichnet, dass** das freie Ende (46) des Drückers (44), das einen Nockenfolger bildet, mit einer Laufrolle ausgestattet ist, die auf der Nockenbahn (48) rollen kann.

10. Kraftfahrzeug, das mit einem Verbrennungsmotor ausgestattet ist, **dadurch gekennzeichnet, dass** es eine Antriebseinheit (10) aufweist, die nach einem der vorhergehenden Ansprüche hergestellt wird.

## Claims

1. Motor vehicle propulsion unit (10) comprising:
- a crankshaft (12) mounted rotatably about an axis (X) of rotation;
- at least one connecting rod (14) of which a head (28) is rotatably mounted on an associated crankpin (18) of the crankshaft (12);
- at least one actuating push-rod (44) sliding in a plane perpendicular to the axis (X) of rotation of the crankshaft (12) between an extended position towards which it is returned, and a retracted position;
- a cam track (48) which is moved by the crankshaft (12) in order to push the push-rod (44) towards its retracted position upon each revolution of the crankshaft (12), the free end (46) of the push-rod (44) forming a cam follower;
**characterized in that** the cam track (48) is borne by the connecting rod (14).

2. Propulsion unit (10) according to the preceding claim, **characterized in that** the cam track (48) is formed by a portion of an edge face (30) of the connecting rod (14) .

3. Propulsion unit (10) according to the preceding claim, **characterized in that** the head (28) of the connecting rod (14) is produced by assembling a cap (32) on a body (24) of the connecting rod (14) by means of at least one fastening screw (34) received in a well (36) produced in the flank of the head (28), the cam track (48) being produced on an external face of the said well (36) .

4. Propulsion unit (10) according to Claim 1, **characterized in that** the cam track is produced in an add-on part which is fastened to an edge face portion of the connecting rod.

5. Propulsion unit (10) according to any one of the preceding claims, **characterized in that** the cam track (48) is oriented globally parallel to a main axis (B) of the connecting rod (14).

6. Propulsion unit (10) according to any one of the preceding claims, **characterized in that** the free end (46) of the push-rod (44) is in contact with the cam track (48) only during a fraction of a revolution of the crankshaft (12) between an upstream angular docking position and a downstream angular lift-off position, the free end (46) of the push-rod (44) being lifted off from the cam track (48) during the remainder of the revolution of the crankshaft (12).

7. Propulsion unit (10) according to the preceding claim, **characterized in that**, between the upstream angular docking position and an intermediate angular position of the crankshaft (12), the cam track (48) has a first inactive contact portion (48A) which forms a neutral profile allowing a contact between the free end (46) of the push-rod (44) and the cam track (48) without urging the push-rod (44) towards its retracted position; with the cam track (48) having a second thrust contact portion (48B) arranged in the continuity of the first inactive contact portion (48A), this second portion (48B) making it possible to control the sliding of the push-rod (44) from its extended position to its retracted position during the rotation of the crankshaft (12) from its intermediate angular position to its angular lift-off position.

8. Propulsion unit (10) according to the preceding claim, **characterized in that** the cam track (48) has, in the continuity of its second active contact portion (48B), a third portion (48C) having a profile making it possible to accompany the push-rod (44) up to its inactive position during the rotation of the crankshaft (12) up to its angular lift-off position.

9. Propulsion unit (10) according to any one of the preceding claims, **characterized in that** the free end (46) of the push-rod (44) forming the cam follower is equipped with a roller able to roll on the cam track (48).

10. Motor vehicle equipped with an internal combustion engine, **characterized in that** it comprises a propulsion unit (10) produced according to any one of the preceding claims.
